# EUROPEAN PATENT APPLICATION

(11) **EP 1 266 712 A2**
(43) Date of publication of application: **18.12.2002**
(21) Application number: 02009980.0
(22) Date of filing: 03.05.2002
(51) Int. Cl.: B23D 65/00, B23D 61/12

(54) **Saw blades and methods for manufacturing saw blades**

(30) Priority: 12.06.2001 US 879605
(71) Applicant: MILWAUKEE ELECTRIC TOOL CORPORATION, Brookfield Wisconsin 53005 (US)
(72) Inventor: Rohman, Kenneth J., Cedarburg, WI 53012 (US); Simonis, David L., Franklin, WI 53132 (US); Stanley, Robert, Brookfield, WI 53005 (US); Yenchesky, James, Milwaukee, WI 53222 (US)
(74) Representative: Grünecker, Kinkeldey, Stockmair & Schwanhäusser Anwaltssozietät

(57) **Abstract**

Saw blades and methods of manufacturing saw blades. An exemplary method includes the acts of providing blade stock having a first surface and a second surface, forming a first pattern on the first surface, such as a cross-hatch pattern, forming a second pattern on the second surface, forming a first saw blade from the blade stock, the first saw blade having a first blade first surface including a first portion of the first pattern, and a first blade second surface including a first portion of the second pattern, forming a second saw blade from the blade stock, the second saw blade having a second blade first surface including a second portion of the first pattern and a second blade second surface having a second portion of the second pattern, positioning the first saw blade and the second saw blade in a position such that the first blade's first surface is adjacent one of the second blade first surface, and the second blade second surface, heat-treating the first saw blade and the second saw blade in the position, and removing from the position, after the heat-treating act, the first saw blade and the second saw blade.

## Description

### FIELD OF THE INVENTION

The present invention relates to saw blades and, more particularly, to methods for manufacturing saw blades and saw blades manufactured by such methods.

### BACKGROUND OF THE INVENTION

Typically, to manufacture saw blades, such as, for example, reciprocating saw blades, a supply of blade stock having teeth on one edge is stamped into a blade shape. If necessary, the teeth are then set to provide a given set pattern. The saw blades are stacked, and the stack of saw blades is heat-treated. After heat-treating, the saw blades are separated from the stack, and any necessary finishing, such as painting, is accomplished.

### SUMMARY OF THE INVENTION

One problem with the above-described method and the saw blades manufactured by this method is that the resulting saw blades do not have a consistent tooth pattern on the cutting edge. For example, some saw blades are stamped with only a partial tooth or no tooth at the forward end of the cutting edge. Blades having a full tooth at the forward end are preferred by users.

To alleviate this problem, saw blades may be produced from un-toothed blade stock. The un-toothed blade stock is stamped into a blade shape. Teeth are then ground into each blade along a cutting edge and are set in the desired tooth set pattern. As a result, the blades are virtually identical so that, when stacked for heat-treating, each blade nests with the adjacent blades.

One problem with this improved method is that, because the stacked blades are nested during heat-treating, diffusion bonding occurs between the blades, causing the blades to stick together. The blades must then be separated from the stack by a worker, typically by banging or twisting each individual blade from the stack. This separation steps requires an additional worker and can cause damage to the blades.

The present invention provides saw blades and methods of manufacturing saw blades which substantially alleviate the problems with the above-described methods. In the methods of the present invention, the blades are formed with a pattern, such as, for example, a cross-hatch pattern, on the lateral faces or surfaces of the blades. The surface patterns provide sufficient difference between the surfaces of the adjacent blades to reduce the amount of diffusion bonding during heat treatment. As a result, separation of the blades is often unnecessary and, even when necessary, requires less force to be applied to the blades by the worker.

More particularly, the present invention provides a method of manufacturing a saw blade, the method including the acts of forming a first blade having a first blade surface including a first pattern, forming a second blade having a second blade surface including a second pattern, positioning the first blade and the second blade in a position such that the first blade surface is adjacent the second blade surface, and heat-treating the first blade and the second blade in the position.

Also, the present invention provides a method of manufacturing a saw blade, the method including the acts of providing blade stock having a surface, forming a pattern on the surface, forming a first blade from the blade stock, the first blade having a first blade surface including a first portion of the pattern, forming a second blade from the blade stock, the second blade having a second blade surface including a second portion of the pattern, positioning the first blade and the second blade in position such that the first blade surface is adjacent the second blade surface, and heat-treating the first blade and the second blade in the position.

In addition, the present invention provides a method of manufacturing a saw blade, the method including the acts of providing blade stock having a first surface and a second surface, forming a first pattern on the first surface, forming a second pattern on the second surface, forming a first blade from the blade stock, the first blade having a first blade first surface including a first portion of the first pattern and a first blade second surface including a first portion of the second pattern, forming a second blade from the blade stock, the second blade having a second blade first surface including a second portion of the first pattern and a second blade second surface having a second portion of the second pattern, positioning the first blade and the second blade in a position such that the first blade surface is adjacent one of the second blade first surface and the second blade surface, and heat-treating the first blade and the second blade in the position.

Further, the present invention provides a method of manufacturing a saw blade, the method including the acts of providing blade stock having a surface, forming a pattern on the surface, forming a first blade from the blade stock, the first blade having a first blade surface including a first portion of the pattern, forming a second blade from the blade stock, the second blade having a second blade surface including a second portion of the pattern, positioning the first blade and the second blade in a position such that the first blade surface is adjacent the second blade surface, heat-treating the first blade and the second blade in the position, and removing from the position, after the heat-treating act, the first blade from the second blade.

Also, the present invention provides a method of manufacturing a reciprocating saw blade, the method including the acts of providing blade stock having a first surface and a second surface, forming a first pattern on the first surface, the first pattern including a cross-hatch pattern, forming a second pattern on the second surface, forming a first reciprocating saw blade from the blade stock, the first reciprocating saw blade having a first blade first surface including a first portion of the first pattern and a first blade second surface including a first portion of the second pattern, the act of forming the first reciprocating saw blade including the acts of forming a reciprocating saw blade shape having an edge, and forming teeth on the edge, forming a second reciprocating saw blade from the blade stock, the second reciprocating saw blade having a second blade first surface including a second portion of the first pattern and a second blade second surface having a second portion of the second pattern, positioning the first reciprocating saw blade and the second reciprocating saw blade in a position such that the first blade first surface is adjacent one of the second blade first surface and the second blade second surface, heat-treating the first reciprocating saw blade and the second reciprocating saw blade in the position, and removing from the position, after the heat-treating act, the first reciprocating saw blade and the second reciprocating saw blade.

In addition, the present invention provides a reciprocating saw blade, the blade manufactured by a method including the acts of providing blade stock having a first surface and a second surface, forming a first pattern on the first surface, the first pattern including a cross-hatch pattern, forming a second pattern on the second surface, forming a first reciprocating saw blade from the blade stock, the first reciprocating saw blade having a first blade first surface including a first portion of the first pattern and a first blade second surface including a first portion of the second pattern, the act of forming the first reciprocating saw blade including the acts of forming a reciprocating saw blade shape having an edge, and forming teeth on the edge, forming a second reciprocating saw blade from the blade stock, the second reciprocating saw blade having a second blade first surface including a second portion of the first pattern and a second blade second surface having a second portion of the second pattern, positioning the first reciprocating saw blade and the second reciprocating saw blade in a position such that the first blade first surface is adjacent one of the second blade first surface and the second blade second surface, heat-treating the first reciprocating saw blade and the second reciprocating saw blade in the position, and removing from the position, after the heat-treating act, the first reciprocating saw blade and the second reciprocating saw blade.

One independent advantage of the present invention is that the saw blades manufactured by the methods of the present invention are virtually identical.

Another independent advantage of the present invention is that the saw blades manufactured by the methods of the present invention have the desired tooth pattern, such as a full tooth at the forward end of the cutting edge.

Yet another independent advantage of the present invention is that the surface pattern provides sufficient difference between the surfaces of the adjacent blades to reduce the amount of diffusion bonding during heat treatment. As a result, separation of the blades is often unnecessary and, even when necessary, requires less force to be applied to the blades by the worker. The need for additional workers to separate the blades may be eliminated, and the potential damage caused to the blades during separation is reduced.

Other independent features and independent advantages of the present invention will become apparent to those skilled in the art upon review of the following detailed description, claims and drawings.

### BRIEF DESCRIPTION OF THE DRAWINGS

Fig. 1 is a perspective view of a saw blade manufactured by a method embodying the present invention.
Fig. 2 is a perspective view of a supply of blade stock.
Fig. 3 is a perspective view of a supply of blade stock formed with a pattern.
Fig. 4 is a cross-sectional view taken generally along lines 4--4 in Fig. 3.
Fig. 5 is a perspective view of a blade shape stamped from the blade stock.
Fig. 6 is a perspective view of the blade shape with teeth ground into an edge of the blade shape.
Fig. 7 is a side view of the blade illustrating a set pattern for the teeth.
Fig. 8 is a perspective view of a stack of blades.
Fig. 9 is a cross-sectional view taken generally along lines 9--9 in Fig. 8.
Fig. 10 is a perspective view of blades being removed from the stack.
Fig. 11 illustrates different exemplary patterns which may be formed on the surfaces of the blades.

Before one embodiment of the invention is explained in detail, it is to be understood that the invention is not limited in its application to the details of the construction and the arrangements of the components set forth in the following description or illustrated in the drawings. The invention is capable of other embodiments and of being practiced or carried out in various ways. Also, it is understood that the phraseology and terminology used herein is for the purpose of description and should not be regarded as limiting.

### DETAILED DESCRIPTION OF THE PREFERRED EMBODIMENT

A saw blade, such as, for example, a reciprocating saw blade 10, and a method of manufacturing a saw blade embodying the invention are illustrated in the Figures. While a reciprocating saw blade 10 and methods of manufacturing the reciprocating saw blade 10 are illustrated and described, it should be understood that the present invention may be applicable to other saw blades, to other types of blades and to other tool elements.

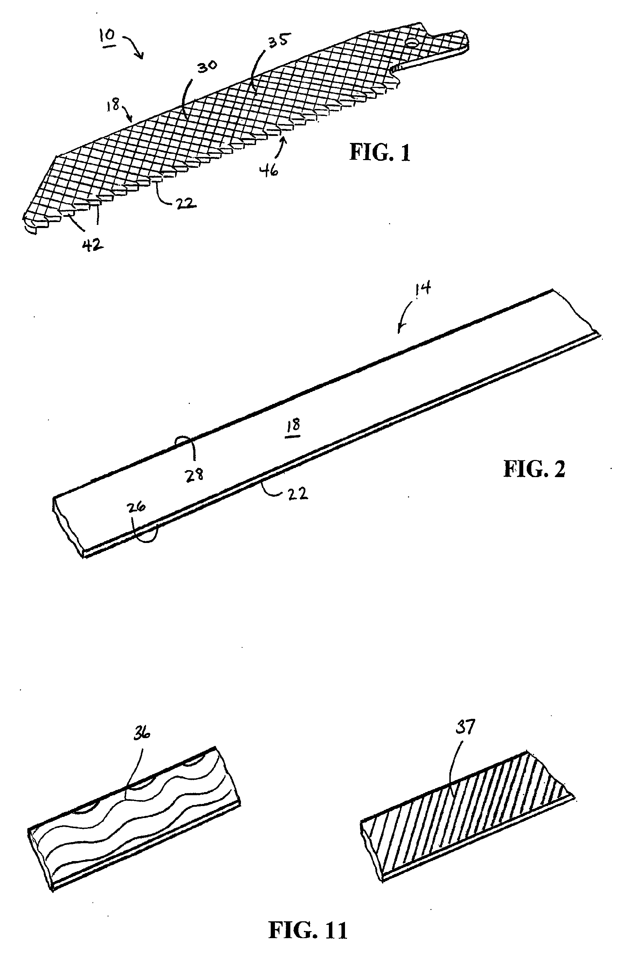

The reciprocating saw blade 10 manufactured by a method embodying the invention is illustrated in Fig. 1. In some aspects of the invention, additional saw blades 10 are substantially identical. For purposes of illustration, the additional saw blades are identified by the same reference number "A, B, C, ...*n*".

The saw blades 10 are made from a supply of blade stock 14. As shown in Fig. 2, the blade stock 14 has a substantially smooth first surface 18 and a smooth second surface 22 (not shown). The blade stock 14 has spaced apart edges 26 and 28.

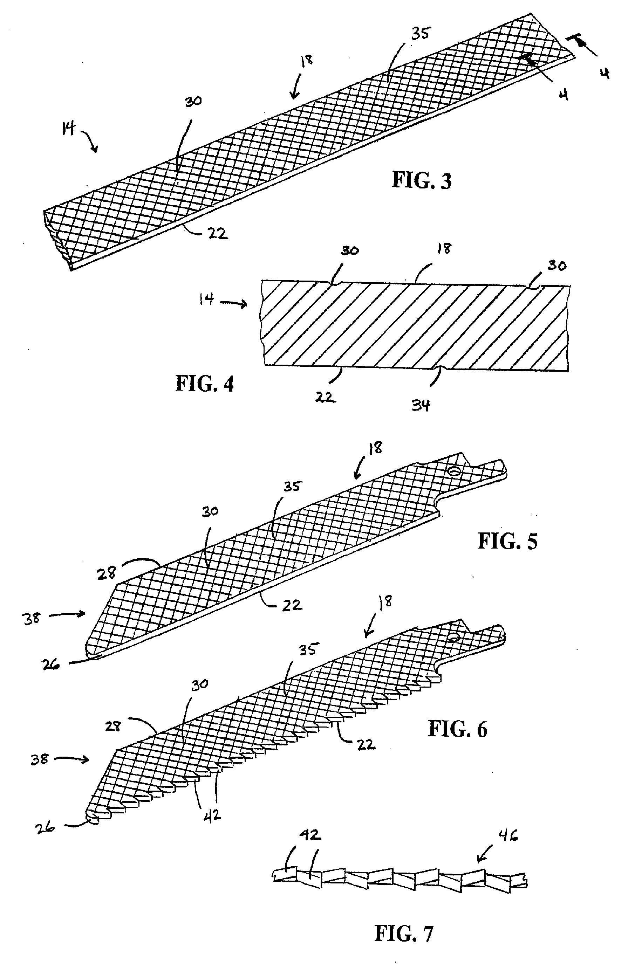

As shown in Figs. 3-4, the blade stock 14 is formed with a first pattern 30 on the first surface 18 and a second pattern 34 on the second surface 22 (partially shown in Fig. 4). Preferably, the patterns 30 and 34 are rolled into the surfaces 18 and 22, respectively, by rollers (not shown) which are etched with a negative image of the patterns 30 and 34. The act of forming the patterns 30 and 34 on the surfaces 18 and 22, respectively, may be conducted simultaneously with an act of forming the blade stock 14, such as at the end of forming the blade stock 14, or, as shown in Figs. 1-2 for purposes of illustration, may be conducted as a subsequent act after the blade stock 14 formed.

In the illustrated construction, the patterns 30 and 34 are cross-hatch patterns 35. As shown in Fig. 4, the patterns 30 and 34 are offset and, therefore, form slightly different patterns on the opposite surfaces 18 and 22, respectively, of the blade stock 14. In other constructions (not shown), the patterns 30 and 34 may not be offset and may, therefore, be substantially the same pattern on the opposite surfaces 18 and 22, respectively.

As shown in Fig. 11, different patterns, such as, for example, a wavy pattern 36 or a diagonal pattern 37 may be substituted for the cross-hatch pattern 35. If a diagonal pattern, such as the pattern 37, is applied to one surface 18, a diagonal pattern (not shown) oriented at a non-parallel angle relative to the pattern 37 and, preferably, at 90° to the pattern 37 is preferably applied to the other surface 22. Further, in other constructions (not shown), one type of pattern, such as the cross-hatch pattern 35, may be formed on one surface (for example, on the first surface 18), and another pattern, such as the diagonal pattern, may be formed on the other surface (for example, the second surface 22).

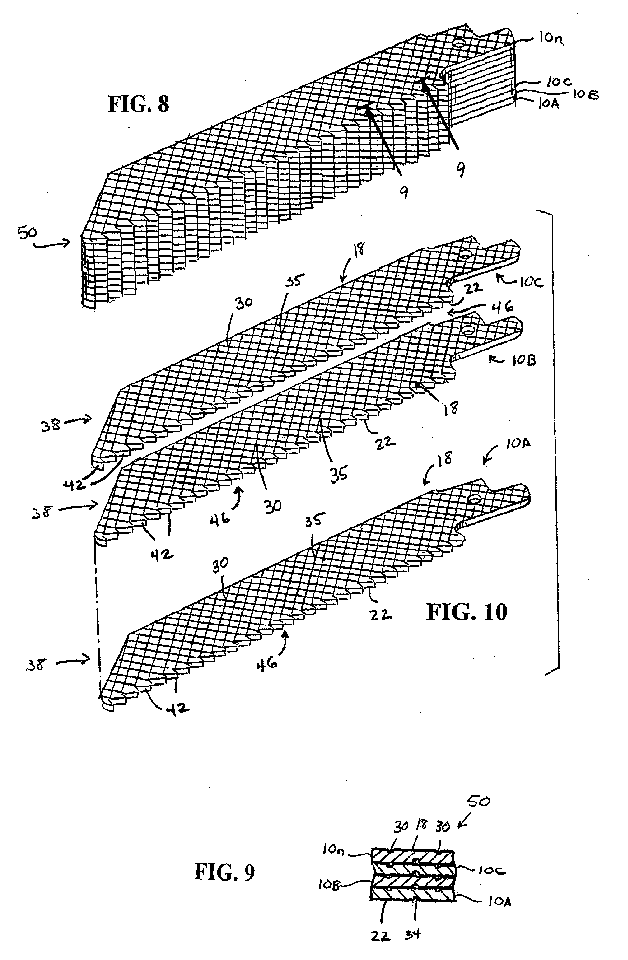

As shown in Fig. 5, the blade stock 14 having the surface patterns 30 and 34 is then stamped into a blade shape 38. In the illustrated method, the blade shape 38 is that of a typical reciprocating saw blade. Teeth 42 are then ground into one edge 26 of the blade shape 38. Because the teeth 42 are ground into each blade shape 38, the resulting toothed blade shapes 38 are substantially identical. As shown in Fig. 7, the teeth 42 are then set in a desired set pattern 46, such as, for example, a wavy, raker, or raker-X pattern. The stamping, grinding and setting acts produce substantially identical saw blades 10A, 10B, 10C ... 10*n*.

As shown in Fig. 8, the virtually identical saw blades 10A, 10B, 10C ... 10*n* are stacked in a blade stack 50 to be heat-treated. While the adjacent blade 10A, 10B, 10C ... 10*n* nest, as shown in Fig. 9, the patterns on the surfaces of adjacent saw blades do not match (i.e., the pattern 30 on the first surface 18 of the saw blade 10A does not match the pattern 34 on the second surface 22 of the saw blade 10B). The surface patterns 30 and 34 provide sufficient difference between adjacent blades 10A, 10B, 10C ... 10*n* to reduce the amount of diffusion bonding which may occur during heat-treatment.

After heat-treatment, the saw blades 10A, 10B and 10C are removed from the stack 50 (as shown in Fig. 10). Because the amount of diffusion bonding is reduced, separation of diffused saw blades is often unnecessary, and even when necessary, requires less force to be applied to the diffused saw blades. After the saw blades 10 are removed from the stack 50, any finishing acts, such as, for example, painting, are accomplished on the saw blades 10.

With the illustrated methods of manufacturing the saw blades 10, virtually identical saw blades 10 are produced. Also, the surface patterns 30 and 34 greatly reduce the diffusion bonding between adjacent blades 10A, 10B, 10C...10*n* (from over 90% of the blades (not shown) without the patterns to less than 10% of the saw blades 10 with the surface patterns 30 and 34). This may eliminate the need for additional workers to separate the saw blades 10 from a stack 50 after heat-treatment and reduces the potential damage caused to the saw blades 10 during such separation.

Various features of the invention are set forth in the following claims:

## Claims

1. A method of manufacturing a saw blade, said method comprising the acts of:
forming a first blade having a first blade surface including a first pattern;
forming a second blade having a second blade surface including a second pattern;
positioning the first blade and the second blade in a position such that the first blade surface is adjacent the second blade surface; and
heat-treating the first blade and the second blade in the position.

2. The method as set forth in Claim 1 and further comprising, before the forming acts, the acts of:
providing blade stock having a surface; and
forming a blade stock pattern on the surface;
wherein the act of forming a first blade includes forming the first blade from the blade stock.

3. The method as set forth in Claim 2 wherein the act of forming a blade stock pattern includes rolling the blade stock pattern into the surface.

4. The method as set forth in Claim 2 wherein the first pattern is a first portion of the blade stock pattern, and wherein the second pattern is a second portion of the blade stock pattern.

5. The method as set forth in Claim 2 wherein the providing act includes providing blade stock having a first surface and a second surface, and wherein the act of forming a blade stock pattern includes forming a first blade stock pattern on the first surface and forming another blade stock pattern on the second surface.

6. The method as set forth in Claim 5 wherein the first blade stock pattern is different than the other blade stock pattern.

7. The method as set forth in Claim 1 wherein the act of forming a first blade includes forming a cross-hatch pattern on the first blade surface.

8. The method as set forth in Claim 1 wherein the act of forming a first blade includes forming the first blade with a first blade first surface including the first pattern and a first blade second surface including a third pattern, and wherein the act of forming a second blade includes forming the second blade with a second blade first surface including the second pattern and a second blade second surface including a fourth pattern.

9. The method as set forth in Claim 8 and further comprising the act of forming a third blade having a third blade first surface including a fifth pattern and a third blade second surface including a sixth pattern; wherein the positioning act includes positioning the first blade, the second blade and the third blade in a position such that the first blade first surface is adjacent one of the second blade first surface and the second blade second surface and such that the third blade first surface is adjacent another of the second blade first surface and the second blade second surface, and wherein the heat-treating act includes heat-treating the first blade, the second blade and the third blade.

10. The method as set forth in Claim 1 wherein the act of forming a first blade includes the act of forming a blade shape.

11. The method as set forth in Claim 10 wherein the act of forming a blade shape includes the act of stamping a blade shape.

12. The method as set forth in Claim 1 wherein the act of forming a first blade includes the act of forming teeth on an edge of the first blade.

13. The method as set forth in Claim 12 wherein the act of forming teeth includes grinding teeth on the edge of the first blade.

14. The method as set forth in Claim 1 wherein the act of forming a first blade includes the acts of:
stamping a blade shape having an edge; and
grinding teeth into the edge.

15. The method as set forth in Claim 1 wherein the act of forming the first blade includes the act of rolling the first pattern into the first blade surface.

16. The method as set forth in Claim 1 and further comprising, after the heat-treating act, the act of removing from the position the first blade and the second blade.

17. The method as set forth in Claim 1 wherein the first blade is a reciprocating saw blade.

18. A method of manufacturing a saw blade, said method comprising the acts of:
providing blade stock having a surface;
forming a pattern on the surface;
forming a first blade from the blade stock, the first blade having a first blade surface including a first portion of the pattern;
forming a second blade from the blade stock, the second blade having a second blade surface including a second portion of the pattern;
positioning the first blade and the second blade in a position such that the first blade surface is adjacent the second blade surface; and
heat-treating the first blade and the second blade in the position.

19. The method as set forth in Claim 18 wherein the act of forming a pattern includes rolling the pattern into the surface.

20. The method as set forth in Claim 18 wherein the act of forming a pattern includes forming a cross-hatch pattern on the surface.

21. The method as set forth in Claim 18 wherein the first portion of the pattern is different than the second portion of the pattern.

22. The method as set forth in Claim 18 wherein the providing act includes providing blade stock having a first surface and a second surface, and wherein the act of forming a pattern includes forming a first pattern on the first surface and forming a second blade stock pattern on the second surface.

23. The method as set forth in Claim 22 wherein the first pattern is different than the second pattern.

24. The method as set forth in Claim 22 wherein the act of forming a first blade includes forming the first blade with a first blade first surface including a first portion of the first pattern and a first blade second surface including a first portion of the second pattern, and wherein the act of forming a second blade includes forming the second blade with a second blade first surface including a second portion of the first pattern and a second blade second surface including a second portion of the second pattern.

25. The method as set forth in Claim 24 and further comprising the act of forming a third blade having a third blade first surface including a third portion of the first pattern and a third blade second surface including a third portion of the second pattern; wherein the positioning act includes positioning the first blade, the second blade and the third blade in a position such that the first blade first surface is adjacent one of the second blade first surface and the second blade second surface and such that the third blade first surface is adjacent another of the second blade first surface and the second blade second surface, and wherein the heat-treating act includes heat-treating the first blade, the second blade and the third blade.

26. The method as set forth in Claim 18 wherein the act of forming a blade shape includes the act of stamping a blade shape.

27. The method as set forth in Claim 18 wherein the act of forming teeth includes grinding teeth on the edge of the first blade.

28. The method as set forth in Claim 18 wherein the act of forming a first blade includes the acts of:
stamping a blade shape having an edge; and
grinding teeth into the edge.

29. The method as set forth in Claim 18 and further comprising, after the heat-treating act, the act of removing from the position the first blade and the second blade.

30. The method as set forth in Claim 18 wherein the first blade is a reciprocating saw blade.

31. A method of manufacturing a saw blade, said method comprising the acts of:
providing blade stock having a first surface and a second surface;
forming a first pattern on the first surface;
forming a second pattern on the second surface;
forming a first blade from the blade stock, the first blade having a first blade first surface including a first portion of the first pattern and a first blade second surface including a first portion of the second pattern;
forming a second blade from the blade stock, the second blade having a second blade first surface including a second portion of the first pattern and a second blade second surface having a second portion of the second pattern;
positioning the first blade and the second blade in a position such that the first blade first surface is adjacent one of the second blade first surface and the second blade second surface; and
heat-treating the first blade and the second blade in the position.

32. The method as set forth in Claim 31 wherein the act of forming a blade stock pattern includes rolling the first pattern into the first surface and rolling the second pattern into the second surface.

33. The method as set forth in Claim 31 wherein the first pattern is different than the second pattern.

34. The method as set forth in Claim 31 wherein the act of forming a first pattern includes forming a cross-hatch pattern on the first surface.

35. The method as set forth in Claim 31 wherein the act of forming a first blade includes forming the first blade with a first blade first surface including the first portion of the first pattern and a first blade second surface including the first portion of the second pattern, and wherein the act of forming a second blade includes forming the second blade with a second blade first surface including the second portion of the first pattern and a second blade second surface including the second portion of the second pattern.

36. The method as set forth in Claim 35 and further comprising the act of forming a third blade from the blade stock, the third blade having a third blade first surface including a third portion of the first pattern and a third blade second surface including a third portion of the second pattern; wherein the positioning act includes positioning the first blade, the second blade and the third blade in a position such that the first blade first surface is adjacent one of the second blade first surface and the second blade second surface and such that the third blade first surface is adjacent another of the second blade first surface and the second blade second surface, and wherein the heat-treating act includes heat-treating the first blade, the second blade and the third blade.

37. The method as set forth in Claim 31 wherein the act of forming a first blade includes the acts of:
stamping a blade shape having an edge; and
grinding teeth into the edge.

38. The method as set forth in Claim 31 and further comprising, after the heat-treating act, the act of removing from the position the first blade and the second blade.

39. The method as set forth in Claim 31 wherein the first blade is a reciprocating saw blade.

40. A method of manufacturing a saw blade, said method comprising the acts of:
providing blade stock having a surface;
forming a pattern on the surface;
forming a first blade from the blade stock, the first blade having a first blade surface including a first portion of the pattern;
forming a second blade from the blade stock, the second blade having a second blade surface including a second portion of the pattern;
positioning the first blade and the second blade in a position such that the first blade surface is adjacent the second blade surface;
heat-treating the first blade and the second blade in the position; and
removing from the position, after the heat-treating act, the first blade from the second blade.

41. The method as set forth in Claim 40 wherein the act of forming a pattern includes rolling the pattern into the surface.

42. The method as set forth in Claim 40 wherein the act of forming a pattern includes forming a cross-hatch pattern on the surface.

43. The method as set forth in Claim 40 wherein the first portion of the pattern is different than the second portion of the pattern.

44. The method as set forth in Claim 40 wherein the providing act includes providing blade stock having a first surface and a second surface, and wherein the act of forming a pattern includes forming a first pattern on the first surface and forming a second blade stock pattern on the second surface.

45. The method as set forth in Claim 44 wherein the first pattern is different than the second pattern.

46. The method as set forth in Claim 44 wherein the act of forming a first blade includes forming the first blade with a first blade first surface including a first portion of the first pattern and a first blade second surface including a first portion of the second pattern, and wherein the act of forming a second blade includes forming the second blade with a second blade first surface including a second portion of the first pattern and a second blade second surface including a second portion of the second pattern.

47. The method as set forth in Claim 40 and further comprising the act of forming a third blade having a third blade first surface including a third portion of the first pattern and a third blade second surface including a third portion of the second pattern; wherein the positioning act includes positioning the first blade, the second blade and the third blade in a position such that the first blade first surface is adjacent one of the second blade first surface and the second blade second surface and such that the third blade first surface is adjacent another of the second blade first surface and the second blade second surface, and wherein the heat-treating act includes heat-treating the first blade, the second blade and the third blade.

48. The method as set forth in Claim 47 wherein the removing act includes removing from the position the first blade, the second blade and the third blade.

49. The method as set forth in Claim 40 wherein the act of forming a first blade includes the acts of:
stamping a blade shape having an edge; and
grinding teeth into the edge.

50. The method as set forth in Claim 40 wherein the first blade is a reciprocating saw blade.

51. A method of manufacturing a reciprocating saw blade, said method comprising the acts of:
providing blade stock having a first surface and a second surface;
forming a first pattern on the first surface, the first pattern including a cross-hatch pattern;
forming a second pattern on the second surface;
forming a first reciprocating saw blade from the blade stock, the first reciprocating saw blade having a first blade first surface including a first portion of the first pattern and a first blade second surface including a first portion of the second pattern, the act of forming the first reciprocating saw blade including the acts of
forming a reciprocating saw blade shape having an edge, and
forming teeth on the edge;
forming a second reciprocating saw blade from the blade stock, the second reciprocating saw blade having a second blade first surface including a second portion of the first pattern and a second blade second surface having a second portion of the second pattern;
positioning the first reciprocating saw blade and the second reciprocating saw blade in a position such that the first blade surface is adjacent one of the second blade first surface and the second blade second surface;
heat-treating the first reciprocating saw blade and the second reciprocating saw blade in the position; and
removing from the position, after the heat-treating act, the first reciprocating saw blade and the second reciprocating saw blade.

52. A reciprocating saw blade, said blade manufactured by a method comprising the acts of:
providing blade stock having a first surface and a second surface;
forming a first pattern on the first surface, the first pattern including a cross-hatch pattern;
forming a second pattern on the second surface;
forming a first reciprocating saw blade from the blade stock, the first reciprocating saw blade having a first blade first surface including a first portion of the first pattern and a first blade second surface including a first portion of the second pattern, the act of forming the first reciprocating saw blade including the acts of
forming a reciprocating saw blade shape having an edge, and
forming teeth on the edge;
forming a second reciprocating saw blade from the blade stock, the second reciprocating saw blade having a second blade first surface including a second portion of the first pattern and a second blade second surface having a second portion of the second pattern;
positioning the first reciprocating saw blade and the second reciprocating saw blade in a position such that the first blade surface is adjacent one of the second blade first surface and the second blade second surface;
heat-treating the first reciprocating saw blade and the second reciprocating saw blade in the position; and
removing from the position, after the heat-treating act, the first reciprocating saw blade and the second reciprocating saw blade.
